(19) Europäisches Patentamt
European Patent Office
Office européen des brevets

(11) **EP 2 255 434 B1**

## (12) EUROPÄISCHE PATENTSCHRIFT

(45) Veröffentlichungstag und Bekanntmachung des Hinweises auf die Patenterteilung:
**03.01.2018 Patentblatt 2018/01**

(51) Int Cl.:
***H02M 7/483*** (2007.01)

(21) Anmeldenummer: **08873419.9**

(22) Anmeldetag: **11.11.2008**

(86) Internationale Anmeldenummer:
**PCT/EP2008/065270**

(87) Internationale Veröffentlichungsnummer:
**WO 2009/115141 (24.09.2009 Gazette 2009/39)**

(54) **VERFAHREN ZUR STEUERUNG EINES MEHRPHASIGEN STROMRICHTERS MIT VERTEILTEN ENERGIESPEICHERN BEI NIEDRIGEN AUSGANGSFREQUENZEN**

METHOD FOR CONTROLLING A MULTI-PHASE POWER CONVERTER HAVING DISTRIBUTED ENERGY ACCUMULATOR AT LOW OUTPUT FREQUENCIES

PROCÉDÉ DE COMMANDE D'UN REDRESSEUR DE COURANT À PHASES MULTIPLES AVEC DES RÉSERVOIRS D'ÉNERGIE DISTRIBUÉS, À BASSES FRÉQUENCES DE SORTIE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.03.2008 DE 102008014898**

(43) Veröffentlichungstag der Anmeldung:
**01.12.2010 Patentblatt 2010/48**

(73) Patentinhaber: **Siemens Aktiengesellschaft**
**80333 München (DE)**

(72) Erfinder: **HILLER, Marc**
**91207 Lauf an der Pegnitz (DE)**

(56) Entgegenhaltungen:
**EP-A- 1 253 706 US-A- 5 986 909**

- **VEENSTRA M ET AL: "Control of a hybrid asymmetric multi-level inverter for competitive medium-voltage industrial drives" CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 1, 12. Oktober 2003 (2003-10-12), Seiten 190-197, XP010676022 ISBN: 978-0-7803-7883-4**
- **CORZINE K A ET AL: "Comparison of hybrid propulsion drive schemes" ELECTRIC SHIP TECHNOLOGIES SYMPOSIUM, 2005 IEEE PHILADELPHIA, PA, USA JULY 25-27, 2005, PISCATAWAY, NJ, USA,IEEE, 25. Juli 2005 (2005-07-25), Seiten 355-362, XP010846663 ISBN: 978-0-7803-9259-5**
- **SHUAI LU ET AL: "Cascaded Multilevel Converters with Non-Integer or Dynamically Changing DC Voltage Ratios" POWER ELECTRONICS AND MOTION CONTROL CONFERENCE, 2006. IPEMC '06. CES/IEEE 5TH INTERNATIONAL, IEEE, PI, 1. August 2006 (2006-08-01), Seiten 1-5, XP031014162 ISBN: 978-1-4244-0448-3**

**Beschreibung**

Die Erfindung bezieht sich auf ein Verfahren zur Steuerung eines Stromrichters mit wenigstens zwei einen oberen und einen unteren jeweils zwei in Reihe geschalteten zweipoligen Subsystemen aufweisenden Ventilzweigen aufweisenden Phasenmodulen bei niedrigen Ausgangsfrequenzen.

Ein derartiger Stromrichter mit verteilten Energiespeichern ist aus der Veröffentlichung "Modulares Stromrichterkonzept für Netzkupplungsanwendung bei hohen Spannungen", von Rainer Marquardt, Anton Lesnicar und Jürgen Hildinger, abgedruckt im Tagungsband der ETG-Tagung 2002, bekannt. In dieser Veröffentlichung wird ein derartiger Stromrichter für einen netz- und lastseitigen Stromrichter verwendet, wobei diese beiden Stromrichter mit verteilten Energiespeichern gleichspannungsseitig miteinander verkoppelt sind.

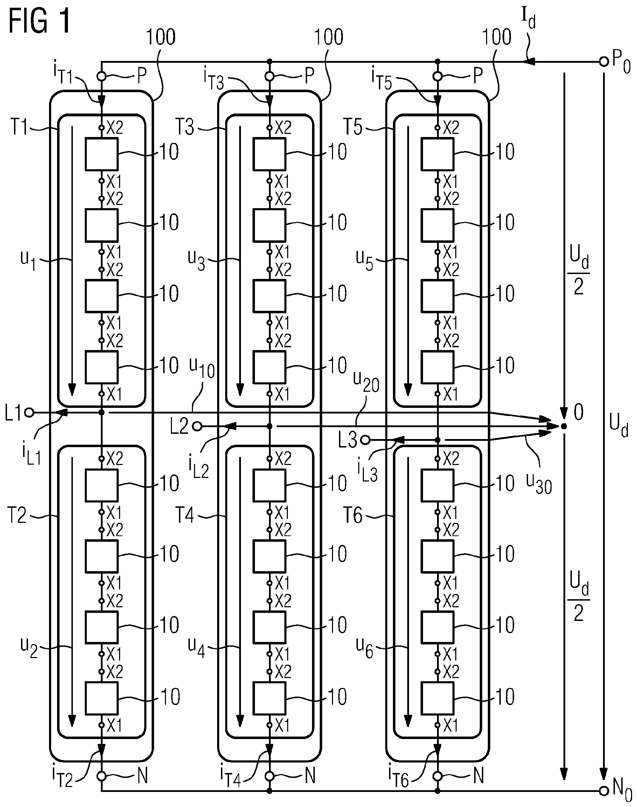

In der FIG 1 ist ein derartiger Stromrichter mit verteilten Energiespeichern näher dargestellt. Gemäß dieser Schaltungsanordnung weist diese bekannte Stromrichterschaltung drei Phasenmodule auf, die jeweils mit 100 bezeichnet sind. Diese Phasenmodule 100 sind gleichspannungsseitig jeweils mit einem Anschluss P bzw. N mit einer positiven bzw. negativen Gleichspannungs-Sammelschiene $P_0$ bzw. $N_0$ elektrisch leitend verbunden. Zwischen diesen beiden Gleichspannungs-Sammelschienen $P_0$ und $N_0$ steht eine Gleichspannung $U_d$ an. Jedes Phasenmodul 100 weist einen oberen und einen unteren Ventilzweig T1 bzw. T3 bzw. T5 und T2 bzw. T4 bzw. T6 auf. Jeder dieser Ventilzweige T1 bis T6 weist eine Anzahl von elektrisch in Reihe geschalteten zweipoligen Subsystemen 10 auf. In diesem Ersatzschaltbild sind pro Ventilzweig T1,...,T6 vier Subsysteme 10 dargestellt. Jeder Verknüpfungspunkt zweier Ventilzweige T1 und T2 bzw. T3 und T4 bzw. T5 und T6 eines Phasenmoduls 100 bildet einen wechselspannungsseitigen Anschluss L1 bzw. L2 bzw. L3 dieses Phasenmoduls 100.

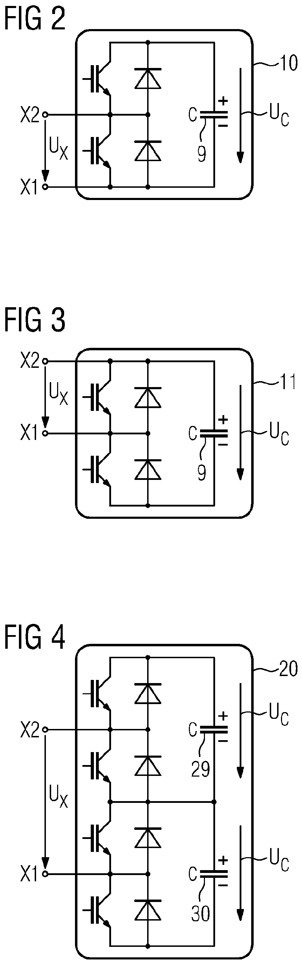

In der FIG 2 ist eine Ausführungsform eines bekannten zweipoligen Subsystems 10 näher dargestellt. Die Schaltungsanordnung gemäß FIG 3 stellt eine funktionale gleichwertige Variante dar. Diese beiden Subsysteme 10 und 11 sind in der DE 101 03 031 A1 näher beschrieben, wobei auch deren Funktionsweise dieser Offenlegungsschrift entnehmbar ist.

Eine weitere Ausführungsform eines zweipoligen Subsystems 20 ist in der FIG 3 näher dargestellt. Diese Ausführungsform des zweipoligen Subsystems 20 ist aus der DE 10 2005 041 087 A1 bekannt. Der Aufbau und die Funktionsweise dieses zweipoligen Subsystems 20 ist in dieser Offenlegungsschrift ausführlich beschrieben, so dass an dieser Stelle darauf verzichtet werden kann.

Die Anzahl der in Reihe geschalteten unabhängigen Energiespeicher 9 bzw. 29,30 zwischen einem positiven Anschluss P und einem wechselspannungsseitigen Anschluss L1 bzw. L2 bzw. L3 eines Phasenmoduls 100 wird als Reihenschaltzahl n bezeichnet. Dabei ist es vorteilhaft, aber nicht zwingend notwendig, zwischen einem wechselspannungsseitigen Anschluss L1 bzw. L2 bzw. L3 und einem negativen Anschluss N eines Phasenmoduls 100 die gleiche Reihenschaltzahl n zu realisieren. Gemäß der FIG 1 weist jeder Ventilzweig T1,...,T6 des mehrphasigen Stromrichters vier zweipolige Subsysteme 10 auf, die elektrisch in Reihe geschaltet sind. Da diese Subsysteme 10 jeweils nur einen unabhängigen Energiespeicher 9 aufweisen, ergibt sich eine Reihenschaltzahl von n=4. Werden anstelle dieser Subsysteme 10 vier Subsysteme 20 gemäß FIG 2 verwendet, so ergibt das eine Reihenschaltzahl n=8, da jedes Subsystem 20 zwei unabhängige Energiespeicher 29 und 30 aufweist.

Für die folgende Erläuterung sei angenommen, dass alle Energiespeicher 9 der Subsysteme 10 eines jeden Ventilzweiges T1,...,T6 dieses mehrphasigen Stromrichters jeweils auf die gleiche Spannung $U_C$ aufgeladen sind. Ein Verfahren zur Aufladung dieser Energiespeicher 9 ist beispielsweise aus dem Tagungsband der ETG-Tagung 2002 entnehmbar.

Die Spannungen $u_1(t),...,u_6(t)$ an den Ventilzweigen T1,..., T6, auch als Ventilzweig-Spannung $u_1(t),...,u_6(t)$ bezeichnet, setzen sich aus einer Gleichgröße $1/2U_d$ und einer Wechselspannungsgröße $u_{10}(t),u_{20}(t),u_{30}(t)$ zusammen. Diese Wechselspannungsgröße $u_{10}(t)$ bzw. $u_{20}(t)$ bzw. $u_{30}(t)$ weist einerseits eine Frequenz und eine Amplitude einer gewünschten Ausgangsspannung des Stromrichters auf. Diese Wechselgrößen $u_{10}(t)$, $u_{20}(t)$ und $u_{30}(t)$ sind gemäß FIG 1 auf einen fiktiven Mittelpunkt 0 zwischen den beiden Gleichspannungs-Sammelschienen $P_0$ und $N_0$ bezogen. Dies führt zu sinusförmigen Umrichter-Ausgangsspannungen $u_{10}(t)$, $u_{20}(t)$ und $u_{30}(t)$, wobei für die Amplituden der auf den Mittelpunkt 0 bezogenen Spannungen $u_{10}(t),u_{20}(t)$ und $u_{30}(t)$ gelten muss, dass jede Amplitude einer Wechselspannungsgröße $u_{10}(t)$, $u_{20}(t)$ und $u_{30}(t)$ immer kleiner als die halbe Gleichspannung $U_d$ sein muss. Die Spannung $u_1(t)$ bzw. $u_2(t)$ bzw. $u_3(t)$ bzw. $u_4(t)$ bzw. $u_5(t)$ bzw. $u_6(t)$ eines Ventilzweiges T1 bzw. T2 bzw. T3 bzw. T4 bzw. T5 bzw. T6 muss also immer positiv sein, da alle in Reihe geschalteten zweipoligen Subsysteme 10 eines Ventilzweiges T1,...,T6 unabhängig von der Ventilzweigstromrichtung in allen Schaltzuständen nur einen Kurzschluss oder eine positive Spannung an den Ausgangsklemmen X1 und X2 eines jeden zweipoligen Subsystems 10 erzeugen können. Negative Spannungen sind aufgrund der Struktur dieser zweipoligen Subsysteme 10, 11 bzw. 20 nicht möglich. Somit kann die Ventilspannung $u_1(t)$ bzw. $u_2(t)$ bzw. $u_3(t)$ bzw. $u_4(t)$ bzw. $u_5(t)$ bzw. $u_6(t)$ eines jeden Ventilzweiges T1 bzw. T2 bzw. T3 bzw. T4 bzw. T5 bzw. T6 zwischen Null und dem n-fachen einer Kondensatorspannung $U_C$ der n unabhängigen Energiespeicher 9 bzw. 29, 30 variiert werden.

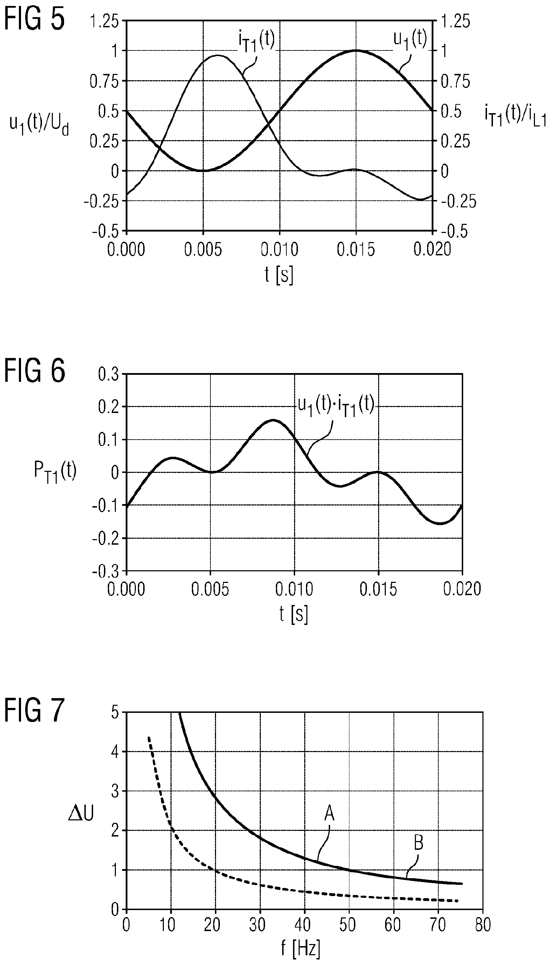

In der FIG 5 sind ein Verlauf der Ventilzweig-Spannung $u_1(t)$ und des Ventilzweig-Stromes $i_1(t)$ des Ventilzweiges T1 des Phasenmoduls 100 des mehrphasigen Stromrichters gemäß FIG 1 im Diagramm über der Zeit t dargestellt. Multipliziert man beide Verläufe, erhält man den zeitlichen Verlauf einer Momentanleistung $P_{T1}(t)$ dieses Ventilzweiges T1, die in einem Diagramm über der Zeit t in der FIG 6 veranschaulicht ist. Integriert man diese Momentanleistung $P_{T1}(t)$ des Ventilzweigs T1 über eine Periode der Ventilzweig-Spannung $u_1(t)$ (entspricht den Flächeninhalten unter den Kurvenabschnitten der Kurve der Momentanleistung $P_{T1}(t)$) erhält man im stationären Zustand stets den Wert Null. Dies bedeutet, dass die Energiespeicher 9 der zweipoligen Subsysteme 10 in diesem Ventilzweig T1 in Summe keine Energie aufnehmen oder abgeben. Entsprechendes gilt auch für alle anderen Ventilzweige T2,...,T6 des mehrphasigen Stromrichters nach FIG 1.

Daraus folgt, dass der Energieinhalt eines jeden Energiespeichers 9 eines jeden Ventilzweigs T1,...,T6 des mehrphasigen Stromrichters nach FIG 1 und damit dieses mehrphasigen Stromrichters stationär konstant ist. Aus diesem Grund benötigen diese zweipoligen Subsysteme 10 bzw. 11 bzw. 20 auch keine Wirkleistungseinspeisung an den jeweiligen Gleichspannungs-Anschlüssen der Energiespeicher 9 bzw. 29, 30.

Die Dimensionierung eines Energieinhalts eines jeden Energiespeichers 9 bzw. 29,30 der zweipoligen Subsysteme 10,11 bzw. 20 eines jeden Ventilzweiges T1,...,T6 erfolgt in vorteilhafter Weise nach dem maximal erforderlichen Energiehub. Dabei ist zu berücksichtigen, dass die dem stationären Spannungsmittelwert überlagerte Spannungswelligkeit ΔU in den Energiespeichern 9 bzw. 29,30 einen maximalen vorbestimmten Grenzwert nicht überschreiten darf. Diese maximale Spannung wird von der Spannungsfestigkeit der in den zweipoligen Subsystemen 10,11 bzw. 20 verwendeten abschaltbaren Halbleiterschaltern und Energiespeichern 9 bzw. 29,30, aber auch von regelungstechnischen Gesichtspunkten bestimmt. Ein entscheidender Faktor bei der Dimensionierung der Energiespeicher 9 bzw. 29,30 ist die Ausgangsfrequenz des mehrphasigen Stromrichters gemäß FIG 1. Je kleiner diese Ausgangsfrequenz wird, desto größer wird der Energiehub pro Periode in den Energiespeicher 9 bzw. 29,30. Dies bedeutet, dass für eine vorbestimmte Spannungswelligkeit ΔU die benötigte Größe der Energiespeicher 9 bzw. 29,30 der zweipoligen Subsysteme 10,11 bzw. 20 mit sinkender Frequenz bis hin zum Gleichspannungs-Betrieb (Frequenz gleich Null) hyperbelartig gegen unendlich gehen würde.

Dieser Zusammenhang von Spannungswelligkeit ΔU und Ausgangsfrequenz f des mehrphasigen Stromrichters gemäß FIG 1 ist in einem Diagramm gemäß FIG 7 dargestellt. In diesem Diagramm sind eine Hyperbelkurve A für die Spannungswelligkeit eines Energiespeichers (durchgezogene Linie) und eine Hyperbelkurve B für die Spannungswelligkeit bei der Verwendung von drei parallelen Teilenergiespeichern pro Energiespeicher 9 bzw. 29, 30, d.h. der dreifachen Zwischenkreiskapazität (unterbrochene Linie) dargestellt. Der Hyperbelkurve A ist zu entnehmen, dass ausgehend von einer Ausgangsfrequenz f=50Hz mit sinkender Frequenz die Spannungswelligkeit ΔU wesentlich zunimmt. Wenn bei halbierter Ausgangsfrequenz die Spannungswelligkeit ΔU gleich der Spannungswelligkeit ΔU bei der Ausgangsfrequenz f=50Hz sein soll, so muss der Wert eines Energiespeichers 9 bzw. 29,30 eines zweipoligen Subsystems 10,11 bzw. 20 ein Vielfaches größer sein.

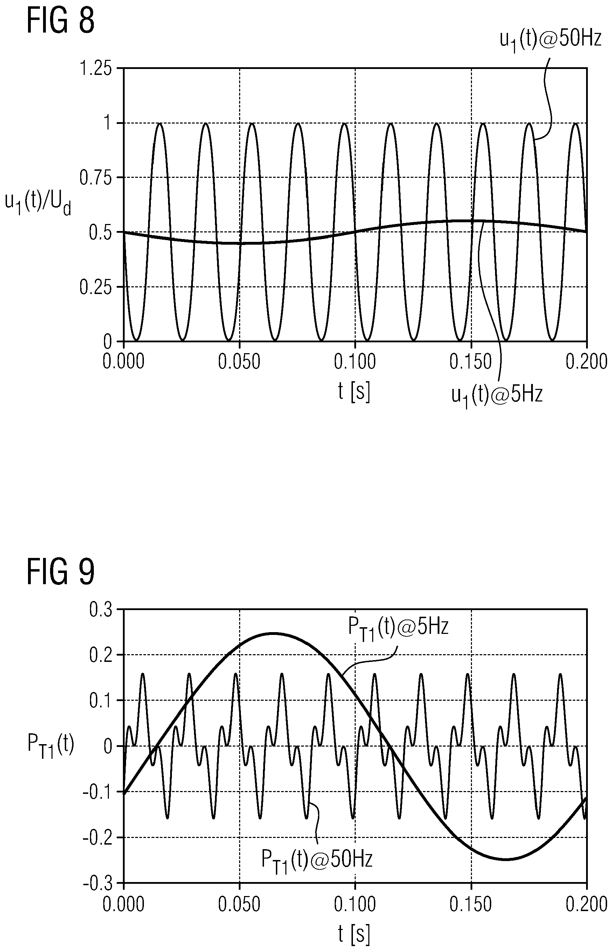

In dem Diagramm gemäß FIG 8 sind ein Verlauf der Ventilzweigspannung $u_1(t)$ mit einer Ausgangsfrequenz f=50Hz und ein Verlauf dieser Ventilzweigspannung $u_1(t)$ mit einer Ausgangsfrequenz f=5Hz über der Zeit t dargestellt. Die Amplitude der Ventilzweigspannung $u_1(t)$ mit einer Ausgangsfrequenz f=5Hz ist entsprechend einer u-f-Kennlinie abgesenkt worden. Berechnet man wieder unter Berücksichtigung des entsprechenden Ventilzweig-Stromes in dem Ventilzweig T1 des mehrphasigen Stromrichters gemäß FIG 1, erhält man eine zugehörige Momentanleistung $P_{T1}(t)$ bei einer Ausgangsfrequenz f=50Hz und f=5Hz. Diese beiden Verläufe der Momentanleistung $P_{T1}(t)$ des Ventilzweigs T1 sind in dem Diagramm der FIG 9 über der Zeit t dargestellt. Der Energiehub bei der Ausgangsfrequenz f=5Hz ist im Vergleich zum Energiehub bei der Ausgangsfrequenz f=50Hz wesentlich angestiegen. In diesem dargestellten Beispiel ist der Energiehub bei f=5Hz um das 25-fache größer als bei f=50Hz.

Um auch in diesem Betriebspunkt (f=5Hz) die gleiche Spannungswelligkeit ΔU wie bei der Ausgangsfrequenz f=50Hz zu erhalten, müsste man den Energiespeicher 9 bzw. 29,30 der zweipoligen Subsysteme 10,11 bzw. 20 um den Faktor 25 größer dimensionieren.

Um eine in Bezug auf Größe und Kosten attraktive Lösung zu erhalten, ist es vorteilhaft, wenn die Auslegung der Energiespeicher 9 bzw. 29,30 der zweipoligen Subsysteme 10,11 bzw. 20 der Ventilzweige T1,...,T6 des mehrphasigen Stromrichters gemäß FIG 1 für einen Nennpunkt durchgeführt wird. Dies bedeutet, dass in diesem Nennpunkt der Energiehub bereits zu einer vorbestimmten maximal zulässigen Spannungswelligkeit ΔU führt. Für einen Betrieb bei niedrigen Frequenzen, also unterhalb einer Nennfrequenz $f_N$, bis hin zu reinem DC-Betrieb (f=0Hz), wie dies beim Anfahren von Antrieben vorkommt, sind die Steuerverfahren gemäß dem Stand der Technik für eine realistische und wettbewerbsfähige Auslegung der Energiespeicher 9 bzw. 29,30 verwendeter zweipoliger Subsystem 10,11 bzw. 20 nicht brauchbar.

Der Erfindung liegt nun die Aufgabe zugrunde, ein Verfahren zur Steuerung eines mehrphasigen Stromrichters mit verteilten Energiespeichern anzugeben, wodurch ein Betrieb bei niedrigen Ausgangsfrequenzen bis hin zum DC-Betrieb ermöglicht wird.

Diese Aufgabe wird erfindungsgemäß mit den Merkmalen des Anspruchs 1 gelöst.

Gemäß der Erfindung wird einem Sollwert aller Ventilzweig-Spannungen des mehrphasigen Stromrichters mit verteilten Energiespeichern eine Common-Mode-Spannung überlagert. Da diese überlagerte Wechselspannung die Potentiale aller drei wechselspannungsseitigen Anschlüsse des mehrphasigen Stromrichters mit verteilten Energiespeichern im Vergleich zu den Potentialen seiner Gleichspannungs-Sammelschienen gleichzeitig verändert, wird diese aufmodulierte Wechselspannung als Common-Mode-Spannung bezeichnet. Durch die überlagerte Common-Mode-Spannung wird dafür gesorgt, dass die Leiter-Leiter-Ausgangsspannungen des mehrphasigen Stromrichters mit verteilten Energiespeichern unberührt bleiben.

Bei einer vorteilhaften Ausführungsform des erfindungsgemäßen Verfahrens wird die Common-Mode-Spannung derart vorgegeben, dass die Spannungswelligkeit aller Energiespeicher 9 bzw. 29, 30 einen vorbestimmten Maximalwert nicht überschreitet. Dadurch bleibt die maximale Spannung an den Energiespeichern ebenfalls unter einem vorbestimmten Maximalwert, welcher gemäß der Spannungsfestigkeit der Halbleiter und Energiespeicher gewählt wird.

Bei einer weiteren vorteilhaften Ausführungsform des erfindungsgemäßen Verfahrens wird die Common-Mode-Spannung derart vorgegeben, dass jeweils ein vorbestimmter Maximalwert für die Ventilzweig-Ströme nicht überschritten wird. Dadurch werden auftretende Durchlass- und Schaltverluste in den abschaltbaren Halbleiterschaltern der verwendeten zweipoligen Subsysteme auf einen Wert beschränkt.

Bei einer weiteren vorteilhaften Ausführungsform des erfindungsgemäßen Verfahrens ist die Amplitude der Common-Mode-Spannung umgekehrt proportional zum Anstieg der Ausgangsfrequenz. Dadurch wird erreicht, dass diese Common-Mode-Spannung nur in einem Frequenzband unterhalb einer Nennfrequenz wirksam ist.

Weitere vorteilhafte Ausgestaltungen des erfindungsgemäßen Verfahrens sind den Unteransprüchen 5 bis 9 zu entnehmen.

Zur weiteren Erläuterung der Erfindung wird auf die Zeichnung Bezug genommen, anhand derer das erfindungsgemäße Verfahren näher erläutert werden soll.

FIG 1       zeigt ein Schaltbild eines bekannten dreiphasigen Stromrichters mit verteilten Energiespeichern, die

FIG 2 bis 4       zeigen jeweils ein Ersatzschaltbild eines zweipoligen Subsystems des Stromrichters nach FIG 1, in der

FIG 5       sind in einem Diagramm über der Zeit t eine Ventilzweig-Spannung und ein zugehöriger Ventilzweig-Strom dargestellt, wogegen in der

FIG 6       in einem Diagramm über der Zeit t eine Momentanleistung korrespondierend zur Ventilzweig-Spannung und Ventilzweig-Strom gemäß FIG 5 über der Zeit t dargestellt ist, die

FIG 7       zeigt in einem Diagramm die Spannungswelligkeit in Abhängigkeit der Ausgangsfrequenz des Stromrichters gemäß FIG 1, in der

FIG 8       sind in einem Diagramm über der Zeit t eine Ventilzweig-Spannung des Stromrichters nach FIG 1 bei einer Ausgangs-Frequenz von 50Hz und 5Hz dargestellt, in der

FIG 9       sind in einem Diagramm über der Zeit t zugehörige Momentanleistungen veranschaulicht, die

FIG 10       zeigt in einem Diagramm über der Zeit t eine Ventilzweig-Spannung bei einer Ausgangsfrequenz f=5Hz mit einer Common-Mode-Spannung ungleich bzw. gleich Null, in der

FIG 11       sind in einem Diagramm über der Zeit t drei Ventilzweig-Spannungen des Stromrichters nach FIG 1 jeweils mit einer Common-Mode-Spannung ungleich Null dargestellt und die

FIG 12       zeigt eine vorteilhafte Ausführungsform des dreiphasigen Stromrichters nach FIG 1.

Wie bereits eingangsseitig beschrieben, gelten für zeitliche Verläufe der Ventilzweig-Spannungen $u_1(t),...,u_6(t)$ die folgenden Gleichungen:

$$u_1(t) \sim 1/2 \cdot U_d - u_{10}(t),$$

$$u_2(t) \sim 1/2 \cdot U_d + u_{10}(t),$$

$$u_3(t) \sim 1/2 \cdot U_d - u_{20}(t),$$

$$u_4(t) \sim 1/2 \cdot U_d + u_{20}(t),$$

$$u_5(t) \sim 1/2 \cdot U_d - u_{30}(t),$$

$$u_6(t) \sim 1/2 \cdot U_d + u_{30}(t).$$

Dies bedeutet, dass jeder Ventilzweig T1,...,T6 zu jedem Zeitpunkt immer die halbe Gleichspannung $U_d$ zwischen den allen Phasenmodulen 100 gemeinsamen Gleichspannungs-Sammelschienen $P_0$ und $N_0$ erzeugt. Dieser Gleichstromgröße ist in der Regel eine sinusförmige Komponente mit einer vorbestimmten Frequenz und einer gewünschten Amplitude einer Stromrichter-Ausgangsspannung $u_{10}(t)$, $u_{20}(t)$ bzw. $u_{30}(t)$, die auf einen fiktiven Mittelpunkt zwischen den Spannungs-Sammelschienen $P_0$ und $N_0$ bezogen ist, überlagert.

Erfindungsgemäß wird diesen Ventilzweig-Spannungen $u_1(t),...,u_6(t)$ jeweils eine Common-Mode-Spannung $u_{CM}(t)$ derart überlagert, dass die verketteten Ausgangsspannungen davon unberücksichtigt bleiben. Für die zeitlichen Verläufe dieser Ventilzweig-Spannungen $u_1(t),...,u_6(t)$ gelten dann folgende Gleichungen:

$$u_1(t) \sim 1/2 \cdot U_d - u_{10}(t) + u_{CM}(t),$$

$$u_2(t) \sim 1/2 \cdot U_d + u_{10}(t) - u_{CM}(t),$$

$$u_3(t) \sim 1/2 \cdot U_d - u_{20}(t) + u_{CM}(t),$$

$$u_4(t) \sim 1/2 \cdot U_d + u_{20}(t) - u_{CM}(t),$$

$$u_5(t) \sim 1/2 \cdot U_d - u_{30}(t) + u_{CM}(t),$$

$$u_6(t) \sim 1/2 \cdot U_d + u_{30}(t) - u_{CM}(t).$$

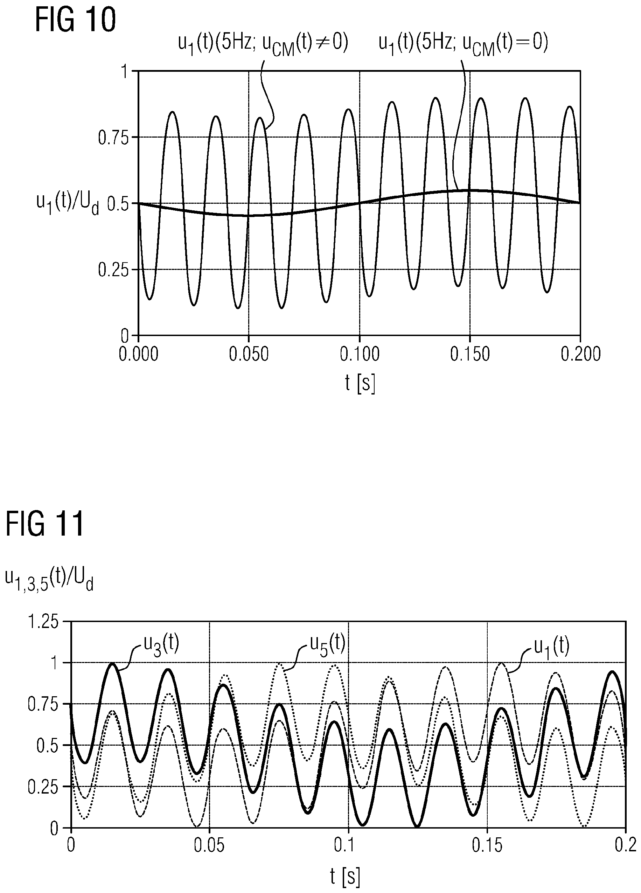

Im Diagramm gemäß der FIG 10 sind eine Ventilzweig-Spannung $u_1(t)$ bei einer Ausgangsfrequenz f=5Hz mit einer Common-Mode-Spannung $u_{CM}(t)$ einmal ungleich Null und einmal gleich Null über der Zeit t dargestellt. Dem Signalverlauf der Ventilzweig-Spannung $u_1(t)$ mit einer überlagerten Common-Mode-Spannung $u_{CM}(t)$ ungleich Null, ist zu entnehmen, dass diese Common-Mode-Spannung $u_{CM}(t)$ sinusförmig ist und deren Amplitude so bemessen ist, dass der Spitzenwert $\hat{u}_1(t)$ der Ventilzweig-Spannung $u_1(t)$ eine obere Grenzbedingung einhält, so dass gilt:

$$0 < u_1(t) < U_d$$

Da Ausgangs-Stromrichterströme $i_{L1}(t),i_{L2}(t)$ und $i_{L3}(t)$, auch als Lastströme $i_{L1}(t),i_{L2}(t)$ und $i_{L3}(t)$ bezeichnet, und somit auch die Ventilzweig-Leistungen $P_{T1}(t),...,P_{T6}(t)$ eines jeden Ventilzweiges T1,...,T6 beim Betrieb mit einer niedrigen Ausgangs-Frequenz f bis hin zu einer Ausgangs-Frequenz f=0 (DC-Betrieb) im zeitlichen Verlauf nur sehr wenige oder gar keine Nullstellen (FIG 9) mehr aufweisen, genügt im Gegensatz zum Betrieb bei Nennfrequenz $f_N$ bei gleicher Energiespeichergröße nun nicht mehr die Symmetrierung der Energiespeicher 9 innerhalb eines Ventilzweiges T1,...,T6 und damit innerhalb einer elektrischen Periode einer Stromrichter-Ausgangsspannung $u_{10}(t),u_{20}(t)$ bzw. $u_{30}(t)$. Die Perioden, in denen die Ventilzweige T1,...,T6 mit einer jeweils konstanten Ventilstromrichtung beaufschlagt werden, sind beim Betrieb ohne aufmodulierte Common-Mode-Spannung $u_{CM}(t)$ zu lang. Dadurch entladen sich die Energiespeicher 9 bzw. 29,30 der verwendeten zweipoligen Subsysteme 10,11 bzw. 20 zu sehr bzw. laden sich zu sehr auf, was zu einer unzulässig hohen Spannungswelligkeit $\Delta U$ in den zweipoligen Subsystemen 10,11 bzw. 20 führen würde.

Durch die Aufmodulierung einer Common-Mode-Spannung $u_{CM}(t)$ wird ein Energieaustausch zwischen den in Schaltzustand II ($U_X=U_C$) befindlichen Subsysteme 10,11 bzw. 20 der an den Gleichspannungs-Sammelschienen $P_0$ und $N_0$ angeschlossenen Phasenmodule 100 des mehrphasigen Stromrichters gemäß FIG 1 erzwungen. Befinden sich die Potentiale der Stromrichter-Ausgangsspannungen $u_{10}(t)$, $u_{20}(t)$ und $u_{30}(t)$ in der Nähe der Gleichspannungs-Sammelschiene $P_0$ (FIG 11), so gleichen die Energiespeicher 9 bzw. 29,30 der Subsysteme 10,11 bzw. 20 der unteren Ventilzweigen T2,T4,T6 ihren Energieinhalt einander an. Befindet sich das Potential der Stromrichter-Ausgangsspannungen $u_{10}(t),u_{20}(t)$ und $u_{30}(t)$ nahe an der Gleichspannungs-Sammelschiene $N_0$ des mehrphasigen Stromrichters gemäß FIG 1, so gleichen die Energiespeicher 9 bzw. 29,30 der Subsysteme 10,11 bzw. 20 der oberen Ventilzweige T1,T3 und T5 ihren Energieinhalt einander an.

Diese Angleichung der Energieinhalte hat einen zusätzlichen Ventilzweig-Strom zur Folge, der Bestandteil eines vorhandenen Ausgleichsstromes ist. In diesem Fall erfolgt der Energieausgleich passiv, d.h. ohne Beeinflussung durch eine überlagerte Steuerung/Regelung. Es ist darüber hinaus auch möglich, den Energieausgleich durch eine aktive Beeinflussung der Ventilzweigströme gezielt zu beeinflussen. Dabei kommt das aus der Patentschrift 10 2005 045 090 bekannte Verfahren zum Einsatz.

Die Common-Mode-Spannung $u_{CM}(t)$ kann jedoch unabhängig von der Art des Energieausgleichs (passiv oder aktiv) verwendet werden. Nur durch das infolge einer Common-Mode-Spannung $u_{CM}(t)$ gleichzeitige Verschieben der Potentiale der Stromrichter-Ausgangsspannungen $u_{10}(t)$, $u_{20}(t)$ und $u_{30}(t)$ ist es möglich, den Energiehub der Energiespeicher durch Ausgleichsströme so zu begrenzen, dass die Höhe dieser Ausgleichsströme nicht zu einer ungünstigen Überdimensionierung der Halbleiter führt.

Der zusätzliche Ventilzweig-Strom führt zu höheren Durchlass- und Schaltverlusten in den abschaltbaren Halbleiterschaltern der verwendeten zweipoligen Subsysteme 10,11 bzw. 20. Dadurch erhält man aber eine günstigere Energiespeicher-Dimensionierung der verwendeten Subsysteme 10,11 bzw. 20. D.h., dieser Nachteil ist gegenüber dem Vorteil (günstigere Energiespeicherdimensionierung) als gering einzuschätzen.

Bei der Wahl von Amplitude, Kurvenform (sinusförmig, trapezförmig, dreieckförmig, ...) und Frequenz der Common-Mode-Spannung $u_{CM}(t)$ hat man bei der Auslegung prinzipiell viele Freiheitsgrade. Folgende Punkte spielen bei der Dimensionierung der Common-Mode-Spannung $u_{CM}(t)$ eine wichtige Rolle:

- Vorteilhafter Weise wird man die maximale Änderungsgeschwindigkeit

$$\left.\frac{du_{CM}(t)}{dt}\right|_{max}$$

der überlagerten Common-Mode-Spannung $u_{CM}(t)$ so wählen, dass nicht mehrere Energiespeicher 9 bzw. 29,30 der verwendeten Subsysteme 10,11 bzw. 20 eines Ventilzweiges T1,...,T6 gleichzeitig geschaltet werden müssen, um den vorgegebenen Sollwertverlauf zu folgen. Dadurch würde man den Vorteil der geringeren Motorisolationsleistung durch geringe Spannungssprunghöhen im Vergleich zu Umrichtern mit weniger Stufenzahl wieder teilweise aufgeben. Außerdem wirken sich geringe Spannungssprunghöhen positiv auf die Höhe der Lager- und Wellenströme aus und erhöhen somit die Lebensdauer des Antriebs.

- Je länger man mit den Potentialen in der Nähe der Anschlüsse der Gleichspannungs-Sammelschiene $P_0$ bzw. $N_0$ des mehrpasigen Stromrichters gemäß FIG 1 verbleibt, desto besser können sich die Energieinhalte der Energiespeicher 9 bzw. 29,30 der in Schaltzustand II befindlichen Submodule 10,11 bzw. 20 einander angleichen. Aus diesem Grund erscheint ein trapezförmiger Kurvenverlauf der Common-Mode-Spannung $u_CM(t)$ mit einer ausgeprägten Plateauphase besonders vorteilhaft, ist aber nicht zwingend erforderlich.

- Die Common-Mode-Spannung $u_{CM}(t)$ muss so dimensioniert werden, dass die resultierenden Ventilzweig-Ströme vorzugebende Maximalwerte nicht überschreiten.

- Die Common-Mode-Spannung $u_{CM}(t)$ muss so dimensioniert werden, dass die resultierende Spannungswelligkeit $\Delta U$ in den Energiespeichern 9 bzw. 29,30 der verwendeten Subsysteme 10,11 bzw. 20 vorzugebende Maximalwerte nicht überschreitet.

Bei Anwendung der erfindungsgemäßen Aufmodulierung einer Common-Mode-Spannung $u_{CM}(t)$ muss beim Einsatz von Standard-Netzmotoren darauf geachtet werden, dass die maximale Leiter-Erde-Spannung $u_{LE}$ am Motor nicht überschritten wird, um die Motorisolation nicht zu schädigen. Bei einem ungeerdeten Stromrichter mit galvanischer Entkopplung vom speisenden Netz durch einen einspeiseseitigen Transformator ist es in der Regel so, dass sich das Potential des Sternpunktes der Maschinenwicklung aufgrund der kapazitiven Verhältnisse in der Nähe des Erdpotentials befindet. Durch das Takten des Stromrichters werden die Potentialverhältnisse im Stromrichter selbständig verschoben. Dadurch befindet sich mal die positive Gleichspannungs-

Sammelschiene $P_0$ in der Nähe des Erdpotentials, mal befindet sich die negative Gleichspannungs-Sammelschiene $N_0$ in der Nähe des Erdpotentials. Dabei kann es bei hohen Common-Mode-Spannungen $U_{CM}(t)$ vorkommen, dass die gesamte Zwischenkreisspannung $U_d$ als Leiter-Erde-Spannung $U_{LE}$ an den Maschinenklemmen anliegt. Für den Maximalwert $\hat{u}_{LE}$ der Leiter-Erde-Spannung $u_{LE}$ gilt somit im Normalfall maximal:

$$\hat{u}_{LE} = U_d = \frac{2\sqrt{2}}{\sqrt{3}}U_M$$

mit UM: Effektivwert der Leiter-Leiter-Motorspannung.
Noch höhere Zwischenkreisspannungen $U_d$ und somit höhere Werte für $\hat{u}_{LE}$ sind zwar möglich, führen aber zu einer ungünstigen Stromrichterauslegung.
Bei Standardnetzmotoren, die für den Betrieb direkt am sinusförmigen Versorgungsnetz konzipiert sind, ist der maximal zulässige Wert $\hat{u}_{LE}$ der Leiter-Erde-Spannung $U_{LE}$ dagegen um den Faktor 2 geringer:

$$\hat{u}_{LENetz} = \frac{\sqrt{2}}{\sqrt{3}}U_M$$

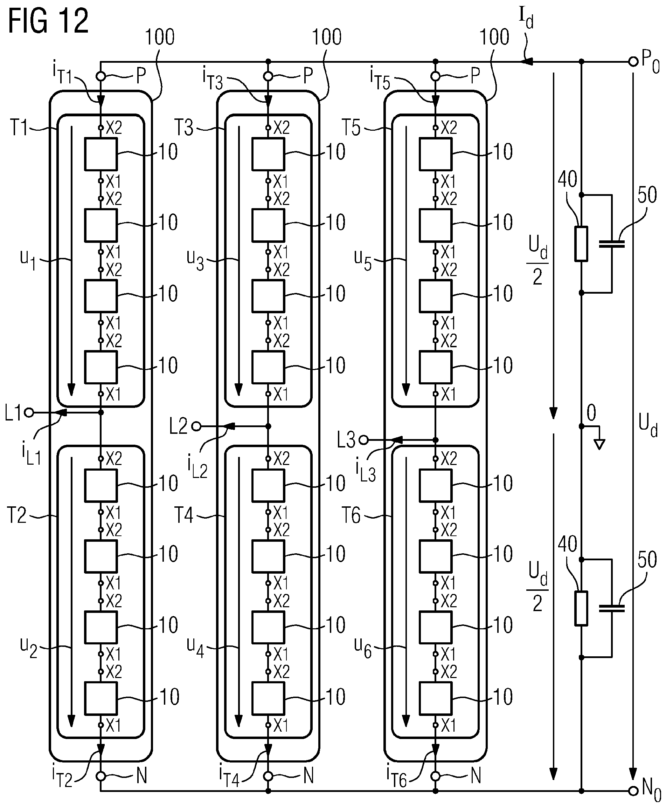

Um dieses Problem zu lösen, ist es vorteilhaft, den fiktiven Mittelpunkt des Zwischenkreises an das Erdpotential anzubinden. Dies kann mit Hilfe eines Widerstandes 40, mittels eines Kondensators 50 oder mittels einer Parallelschaltung eines Widerstandes 40 und eines Kondensators 50 gemäß der FIG 12 erfolgen. Dadurch wird die maximale Spannungsbelastung halbiert und die maximale Leiter-Erde-Spannung an den Maschinenklemmen kann so auf den maximalen Wert $\hat{u}_{LENetz}$ bei sinusförmiger Netzspeisung reduziert werden.
Mittels diesem erfindungsgemäßen Verfahren kann der aus dem Tagungsband der ETG-Tagung 2002 bekannte Umrichter, der netz- und lastseitig einen dreiphasigen Stromrichter mit verteilten Energiespeichern gemäß FIG 1 aufweist, als Antriebs-Umrichter eingesetzt werden, der aus dem Stillstand angefahren werden kann. Bei dieser Anwendung wird erreicht, dass selbst bei niedrigen Frequenzen bis hin zum DC-Betrieb dieses Umrichters die Energiespeicher 9 bzw. 29,30 der verwendeten Subsysteme 10,11 bzw. 20 optimal dimensioniert werden können.

**Patentansprüche**

1. Verfahren zur Steuerung eines mehrphasigen Stromrichters mit wenigstens zwei einen oberen und einen unteren jeweils wenigstens zwei in Reihe geschalteten zweipoligen Subsystemen (10,11) aufweisenden Ventilzweigen (T1,...,T6) aufweisenden Phasenmodulen (100) bei niedrigen Ausgangsfrequenzen (f), wobei jeweils einem Sollwert

$(u_1(t),...,u_6(t))$ einer Ventilzweig-Spannung derart eine Common-Mode-Spannung $(u_{CM}(t))$ überlagert wird, dass eine Summe zweier Ventilzweig-Spannungen $(u_1(t),u_2(t)$ bzw. $u_3(t),u_4(t)$ bzw. $u_5(t),u_6(t))$ eines jeden Phasenmoduls (100) gleich einer Zwischenkreisspannung $(U_d)$ dieses mehrpasigen Stromrichters ist.

**2.** Verfahren nach Anspruch 1, **dadurch gekennzeichnet, dass** die Common-Mode-Spannung $(u_{CM}(t))$ derart vorgegeben wird, dass eine vorbestimmte Spannungswelligkeit $(\Delta U)$ einen vorbestimmten Maximalwert $(U_{max})$ nicht überschreitet.

**3.** Verfahren nach einem der vorgenannten Ansprüche,
**dadurch gekennzeichnet, dass** die Common-Mode-Spannung $(u_{CM}(t))$ derart vorgegeben wird, dass jeweils ein resultierender Ventilzweig-Strom $(i_1,...,i_6)$ nicht überschreitet.

**4.** Verfahren nach Anspruch 1, **dadurch gekennzeichnet, dass** eine Amplitude der Common-Mode-Spannung $(u_{CM}(t))$ umgekehrt proportional zum Anstieg einer Ausgangsfrequenz (f) des mehrphasigen Stromrichters ist.

**5.** Verfahren nach einem der vorgenannten Ansprüche,
**dadurch gekennzeichnet, dass** die Common-Mode-Spannung $u_{CM}(t))$ trapezförmig ist.

**6.** Verfahren nach einem der Ansprüche 1 bis 4,
**dadurch gekennzeichnet, dass** die Common-Mode-Spannung sinusförmig ist.

**7.** Verfahren nach einem der Ansprüche 1 bis 4,
**dadurch gekennzeichnet, dass** die Common-Mode-Spannung $(u_{CM}(t))$ dreieckförmig ist.

**8.** Verfahren nach einem der vorgenannten Ansprüche,
**dadurch gekennzeichnet, dass** die Common-Mode-Spannung $(u_{CM}(t))$ derart vorgegeben wird, dass für einen an den Anschlussklemmen eines Motors anliegenden Maximalwert $(\hat{u}_{LE})$ einer Leiter-Erde-Spannung $(u_{LE})$ folgende Bedingung:

$$\hat{u}_{LE} \leq U_d \leq \frac{2\sqrt{2}}{\sqrt{3}}U_M$$

mit UM: Effektivwert der Leiter-Leiter-Motorspannung
erfüllt wird.

**9.** Verfahren nach einem der Ansprüche 1 bis 7,

**dadurch gekennzeichnet, dass** die Common-Mode-Spannung $(u_{CM}(t))$ derart vorgegeben wird, dass für einen an den Anschlussklemmen eines Standard-Netzmotors, welcher für den Betrieb direkt an einem sinusförmigen Versorgungsnetz ausgelegt ist, anliegenden Maximalwert $(\hat{u}_{LE})$ einer Leiter-Erde-Spannung $(u_{LE})$ folgende Bedingung:

$$\hat{u}_{LENetz} \leq \frac{\sqrt{2}}{\sqrt{3}}U_M$$

mit UM: Effektivwert der Leiter-Leiter-Motorspannung
erfüllt wird.

**Claims**

**1.** Method for controlling a polyphase converter with at least two phase modules (100) having an upper and a lower valve branch (T1, ..., T6) having in each case at least two two-pole subsystems (10, 11) connected in series at low output frequencies (f), a common-mode voltage $(u_{CM}(t))$ being superimposed in each case on a setpoint value $(u_1(t), ..., u_6(t))$ of a valve branch voltage in such a way that a sum of two valve branch voltages $(u_1(t), u_2(t)$ and $u_3(t), u_4(t)$ and $u_5(t), u_6(t)$, respectively, of each phase module (100) is equal to an intermediate circuit voltage $(U_d)$ of this polyphase converter.

**2.** Method according to Claim 1, **characterized in that** the common mode voltage $(u_{CM}(t))$ is predefined in such a way that a predetermined voltage ripple $(\Delta U)$ does not overshoot a predetermined maximum value $(U_{max})$.

**3.** Method according to one of the preceding claims, **characterized in that** the common mode voltage $(u_{CM}(t))$ is predefined in such a way that in each case a resultant valve branch current $(i_1, ..., i_6)$ does not represent an overshoot.

**4.** Method according to Claim 1, **characterized in that** an amplitude of the common mode voltage $(u_{CM}(t))$ is inversely proportional to the rise in an output frequency (f) of the polyphase converter.

**5.** Method according to one of the preceding claims, **characterized in that** the common mode voltage $(u_{CM}(t))$ is trapezoidal.

**6.** Method according to one of Claims 1 to 4, **characterized in that** the common mode voltage is sinusoidal.

7. Method according to one of Claims 1 to 4, **characterized in that** the common mode voltage ($u_{CM}(t)$) is triangular.

8. Method according to one of the preceding claims, **characterized in that** the common mode voltage ($u_{CM}(t)$) is predefined in such a way that, for a maximum value ($\hat{u}_{LE}$) for a line-to-ground voltage ($u_{LE}$) which is present at the connection terminals of a motor, the following condition is met:

$$\hat{u}_{LE} \leq U_d \leq \frac{2\sqrt{2}}{\sqrt{3}} U_M$$

where $U_M$: rms value of the line-to-line motor voltage.

9. Method according to one of Claims 1 to 7, **characterized in that** the common mode voltage ($u_{CM}(t)$) is predefined in such a way that, for a maximum value ($\hat{u}_{LE}$) for a line-to-ground voltage ($u_{LE}$) which is present at the connection terminals of a standard system motor, which is designed for operation directly on a sinusoidal power supply system, the following condition is met:

$$\hat{u}_{LEsystem} = \frac{\sqrt{2}}{\sqrt{3}} U_M$$

where $U_M$: rms value of the line-to-line motor voltage.

**Revendications**

1. Procédé de commande d'un redresseur polyphasé, comprenant au moins deux modules (100) de phase, ayant des branches (T1, ..., T6) de soupape, l'une supérieure et l'autre inférieure, ayant chacune au moins deux sous-systèmes (10, 11) bipolaires montés en série à des fréquences (f) de sortie basses, dans lequel on superpose à une valeur ($u_1(t)$, ..., $u_6(t)$) de consigne d'une tension de branche de soupape, une tension ($u_{CM}(t)$) en mode commun, de manière à ce qu'une somme de deux tensions ($u_1(t)$, $u_2(t)$ ou $u_3(t)$, $u_4(t)$ ou $u_5(t)$, $u_6(t)$) de branche de soupape de chaque module (100) de phase soit égale à une tension ($u_d$) de circuit intermédiaire de ce redresseur de courant polyphasé.

2. Procédé suivant la revendication 1, **caractérisé en ce que** l'on prescrit la tension ($u_{CM}(t)$) en mode commun, de manière à ce qu'une ondulation ($\Delta U$) d'une tension déterminée à l'avance ne dépasse pas une valeur ($U_{max}$) maximum déterminée à l'avance.

3. Procédé suivant l'une des revendications précédentes, **caractérisé en ce que** l'on prescrit la tension ($u_{cm}(t)$) en mode commun, de manière à ne pas dépasser un courant ($i_1$, ..., $i_6$) de branche de soupape qui s'ensuit.

4. Procédé suivant la revendication 1, **caractérisé en ce qu'**une amplitude de la tension ($u_{CM}(t)$) en mode commun est inversement proportionnelle à l'augmentation d'une fréquence (f) de sortie du redresseur de courant polyphasé.

5. Procédé suivant l'une des revendications précédentes, **caractérisé en ce que** la tension ($u_{CM}(t)$) en mode commun est trapézoïdale.

6. Procédé suivant l'une des revendications 1 à 4, **caractérisé en ce que** la tension en mode commun est sinusoïdale.

7. Procédé suivant l'une des revendications 1 à 4, **caractérisé en ce que** la tension $u_{CM}(t)$ en mode commun est triangulaire.

8. Procédé suivant l'une des revendications précédentes, **caractérisé en ce que** l'on prescrit la tension ($u_{CM}(t)$) en mode commun, de manière à satisfaire, pour une valeur ($\hat{u}_{LE}$) maximum, s'appliquant aux bornes de connexion d'un moteur, d'une tension ($u_{LE}$) conducteur-terre, la condition suivante :

$$\hat{u}_{LE} \leq U_d \leq \frac{2\sqrt{2}}{\sqrt{3}} U_M$$

avec $U_m$ : valeur efficace de la tension du moteur conducteur-conducteur.

9. Procédé suivant l'une des revendications 1 à 7, **caractérisé en ce que** l'on prescrit la tension ($u_{CM}(t)$) en mode commun, de manière à satisfaire, pour une valeur ($\hat{u}_{LE}$) maximum, s'appliquant aux bornes de connexion d'un moteur de réseau standard conçu pour le fonctionnement directement sur un réseau d'alimentation sinusoïdal, d'une tension ($u_{LE}$) conducteur-terre, la condition suivante :

$$\hat{u}_{LENetz} \leq \frac{\sqrt{2}}{\sqrt{3}} U_M$$

avec $U_m$ : valeur efficace de la tension du moteur conducteur-conducteur.

FIG 1

FIG 2

FIG 3

FIG 4

FIG 5

FIG 6

FIG 7

FIG 8

$u_1(t)@50Hz$

$u_1(t)/U_d$

t [s]

$u_1(t)@5Hz$

FIG 9

$P_{T1}(t)@5Hz$

$P_{T1}(t)$

$P_{T1}(t)@50Hz$

t [s]

EP 2 255 434 B1

FIG 10

$u_1(t)(5Hz; u_{CM}(t) \neq 0)$   $u_1(t)(5Hz; u_{CM}(t)=0)$

$u_1(t)/U_d$

t [s]

FIG 11

$u_{1,3,5}(t)/U_d$

$u_3(t)$   $u_5(t)$   $u_1(t)$

t [s]

13

## FIG 12

$I_d$

$i_{T1}$  P  100  $i_{T3}$  P  100  $i_{T5}$  P  100  $P_0$

T1  X2  X2  T5  X2

10  10  10

X1  X1  X1
X2  X2  X2

10  10  10

40  50

X1  X1  X1
X2  X2  X2

$u_1$  $u_3$  $u_5$  $\dfrac{U_d}{2}$

10  10  10

X1  X1  X1
X2  X2  X2

10  10  10

X1  X1  X1

L1  L2  L3  0  $U_d$

$i_{L1}$  $i_{L2}$  $i_{L3}$

X2  X2  X2

10  10  10

T2  X1  T4  X1  T6  X1
X2  X2  X2

10  10  10

X1  X1  X1
X2  X2  X2

$u_2$  $u_4$  $u_6$  $\dfrac{U_d}{2}$

10  10  10

X1  X1  X1
X2  X2  X2

10  10  10

X1  X1  X1

40  50

$i_{T2}$  N  $i_{T4}$  N  $i_{T6}$  N  $N_0$

T3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- DE 102005041087 A1
- WO 102005045090 A

**In der Beschreibung aufgeführte Nicht-Patentliteratur**

- **RAINER MARQUARDT ; ANTON LESNICAR ; JÜRGEN HILDINGER.** Modulares Stromrichterkonzept für Netzkupplungsanwendung bei hohen Spannungen. *Tagungsband der ETG-Tagung,* 2002